# EUROPÄISCHE PATENTSCHRIFT

(11) **EP 0 615 494 B1**
(45) Veröffentlichungstag und Bekanntmachung des Hinweises auf die Patenterteilung: **11.10.1995**
(21) Anmeldenummer: 92924642.9
(22) Anmeldetag: 02.12.1992
(51) Int. Cl.: B60R 7/06, E05B 65/19

(54) **BEWEGLICHER HANDSCHUHKASTEN**
MOVABLE GLOVE DEPARTMENT
BOITE A GANTS MOBILE

(30) Priorität: 14.12.1991 DE 4141239
(43) Veröffentlichungstag der Anmeldung: 21.09.1994
(73) Patentinhaber: AUDI AG, 85002 Ingolstadt (DE)
(72) Erfinder: GROSS, Helmut, D-7057 Winnenden (DE); LEILICH, Martin, D-7107 Neckarsulm (DE); ZUSCHANKO, Hans, D-7107 Neckarsulm (DE)
(86) Internationale Anmeldenummer: EP9202781
(87) Internationale Veröffentlichungsnummer: WO9311968

(56) Entgegenhaltungen:
- EP-A- 0 184 620
- DE-A- 1 655 631
- DE-A- 3 739 921
- DE-A- 3 816 407
- DE-C- 3 408 978
- DE-C- 3 926 425

## Beschreibung

Die Erfindung betrifft einen beweglichen Handschuhkasten für ein Kraftfahrzeug entsprechend dem Oberbegriff des Anspruchs 1.

Bei derartigen, beispielsweise aus der DE-C 39 26 425 bekannten Handschuhkästen ist das Schloßteil der Schließvorrichtung nahe der Oberkante des Vorderteils des Handschuhkasten und an der Innenseite desselben angeordnet und durch einen in diesem Vorderteil vorgesehenen Handgriff betätigbar, während das Fallenteil als U-förmiger Bügel an einem ortsfesten, mit dem Armaturenbrett verbundenen Rahmenteil vorgesehen ist. Da das Fallenteil und/oder das Schloßteil von dem sie tragenden Bauteil vorstehen müssen, um miteinander in Eingriff kommen zu können, besteht die Gefahr, daß sich der Benutzer an diesen vorstehenden Teilen verletzt und daß sich in dem Handschuhkasten befindliche Gegenstände an diesen vorstehenden Teilen verhängen. Probleme entstehen auch dadurch, daß der in das Vorderteil des Handschuhkastens eingelassene Betätigungsgriff für das Schloßteil im Gegensatz zu der aus Sicherheitsgründen gepolsterten Ausführung des Vorderteils aus einem relativ harten Material besteht, was bei einem Aufprall zu Verletzungen führen kann. Schließlich ist der Umstand, daß das Schloßteil und/oder das Fallenteil bei geöffnetem Handschuhkasten sichtbar ist, ästhetisch nicht befriedigend.

Der Erfindung liegt die Aufgabe zugrunde, einen Handschuhkasten der gattungsgemäßen Art zu schaffen, bei dem eine Verletzungsgefahr ausgeschlossen ist.

Diese Aufgabe wird erfindungsgemäß durch die im Kennzeichen des Anspruchs 1 angegebenen Merkmale gelöst.

Dadurch, daß die Schließeinrichtung nicht, wie üblich, im Bereich der Vorderkante des Handschuhkasten angeordnet ist, sondern in dessen rückwärtigem Bereich, besteht keine Gefahr, daß sich der Benutzer an vorstehenden Teilen der Schließeinrichtung verletzen kann, da er aufgrund der Anordnung der Schließeinrichtung im hinteren Bereich des Handschuhkastens nicht mit Teilen derselben in Berührung kommen kann. Durch die vorgeschlagene Anordnung der Schließeinrichtung ist diese auch bei geöffnetem Handschuhkasten nicht sichtbar, womit der ästhetische Eindruck verbessert wird. Aufgrund der Fernbedienung des beweglichen Schloßteils entfällt die Anordnung eines Griffes in der Vorderwand des Handschuhkastens, was nicht nur vom ästhetischen Gesichtspunkt her vorteilhaft ist, sondern vor allem der Sicherheit zugute kommt, da nun diese Vorderwand lückenlos gepolstert werden kann.

Vorzugsweise ist das Fallenteil in der Mitte der rückwärtigen Begrenzung des Handschuhkastens angeordnet. Es kann aus einem Schließbolzen bestehen, der mit einem das Schloßteil bildenden Haken zusammenwirkt, der entgegen Federkraft in eine den Schließbolzen freigebende Stellung schwenkbar ist und an der Stelle, die mit dem Schließbolzen in Kontakt kommt, wenn der Handschuhkasten geschlossen wird, eine Schrägfläche aufweist, durch die in Zusammenwirken mit dem Schließbolzen der Haken entgegen der Federkraft verschwenkt wird, bis der Schließbolzen in den Haken einrastet.

Die Fernbedienung des Schloßteils kann mittels eines Zugseils erfolgen, das in einem Betätigungsknopf am Armaturenbrett endet. Alternativ kann die Fernbedienung auch durch einen Elektromagneten erfolgen, der durch Schließen eines Schalters im Armaturenbrett erregt werden kann und dann das Schloßteil in die Freigabestellung schwenkt.

Ein Ausführungsbeispiel der Erfindung wird im folgenden unter
Bezugnahme auf die Zeichnungen beschrieben. Es zeigt:
- Fig. 1: einen Querschnitt eines im Armaturenbrett eines Kraftfahrzeuges angebrachten Handschuhkastens, und
- Fig. 2: eine Draufsicht der Schließeinrichtung für den Handschuhkasten von Fig. 1.

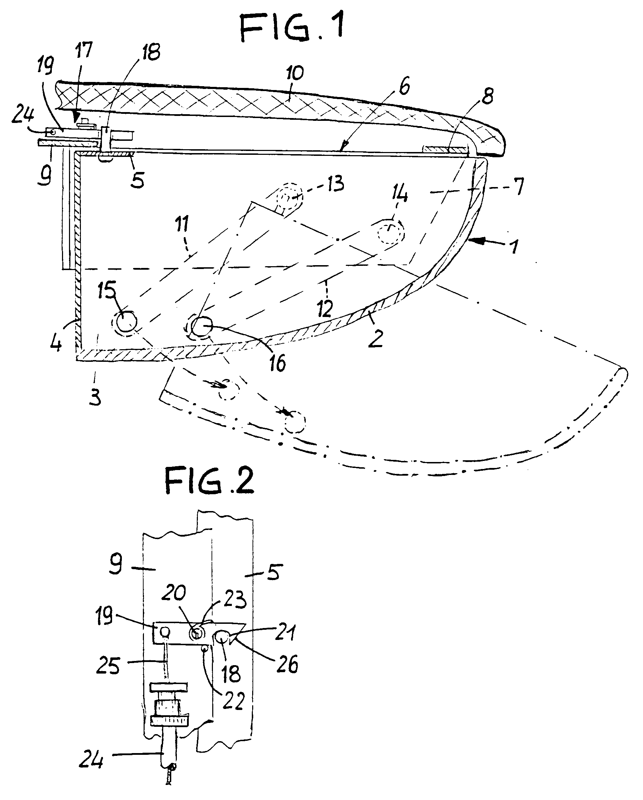

In Fig. 1 ist ein Handschuhkasten 1 dargestellt, der einen gleichzeitig die Vorderwand bildenden Boden 2, Seitenteile 3, eine Rückwand 4 und anschließend an die Oberkante derselben einen Steg 5 aufweist. Der Handschuhkasten 1 ist schwenkbar und verschiebbar in einem Rahmen 6 gelagert, der seitliche Wangen 7 und diese verbindende Stege 8, 9 aufweist. Der Rahmen 6 ist mit dem Armaturenbrett verbunden, von dem lediglich die Deckplatte 10 dargestellt ist. Die Verbindung des Handschuhkastens 1 mit den Wangen 7 des Rahmens 6 erfolgt auf jeder Seite mittels zweier Hebel 11 und 12, die bei 13 bzw. 14 drehbar mit der Wange 7 und bei 15 und 16 drehbar mit der Seitenwand 3 des Handschuhkastens 1 verbunden sind. Beim Öffnen des Handschuhkastens 1 gelangt dieser in die strichpunktiert dargestellte Stellung.

Zur Halterung des Handschuhkastens 1 in der Schließstellung dient eine Schließeinrichtung 17, die im Ausführungsbeispiel aus einem Schließbolzen 18 und einem mit diesem zusammenwirkenden, schwenkbaren Haken 19 besteht. Der Schließbolzen 18, der das Fallenteil bildet, ist an dem Steg 5 am hinteren oberen Ende des Handschuhkastens 1 angebracht und erstreckt sich nach oben. Der Haken 19, der das betätigbare Schloßteil bildet, ist um einen Drehzapfen 20 schwenkbar an dem Steg 9 des Rahmens 6 angebracht. Er weist eine Aussparung 21 auf, in welche der Schließbolzen 18, wie aus Fig. 2 ersichtlich ist, einrasten kann. Eine Feder 23 hält den Haken 19 in seiner dargestellten Sperrstellung. Ein Anschlag 22 begrenzt die Schwenkbewegung des Hakens 19 unter dem Einfluß der Feder 23. Der Haken 19 kann durch eine Fernbedienung entgegen der Wirkung der Feder 23 in seine den Schließbolzen 18 freigebende Stellung geschwenkt werden. Im Ausführungsbeispiel erfolgt diese Fernbetätigung mit Hilfe eines Bowdenzuges 24, dessen Zugseil 25 am einen Ende mit dem Haken 19 und am anderen Ende mit einem Betätigungsknopf am Armaturenbrett in Reichweite des Fahrers verbunden ist. Wird das Zugseil 25 angezogen, so wird der Schließbolzen 18 freigegeben und der Handschuhkasten 1 kann durch Schwerkraft, eventuell unterstützt durch eine Feder oder auch entgegen der Wirkung eines Dämpfers, in die strichpunktierte Lage von Fig. 1 gelangen. Wird der Handschuhkasten 1 wieder geschlossen, so kommt der Schließbolzen 18 mit der Schrägfläche 26 am vorderen Ende des Hakens 19 in Kontakt, wodurch der Haken 19 entgegen der Wirkung der Feder 23 verschwenkt wird, bis der Schließbolzen 18 in die Aussparung 21 einrasten kann.

Selbstverständlich sind zahlreiche Abwandlungen des dargestellten Ausführungsbeispiels möglich, ohne den Rahmen der Erfindung zu verlassen. So kann die Fernbetätigung des Hakens 19 auch mittels eines Elektromagneten erfolgen, dessen Anker mit dem Haken 19 verbunden ist und der durch Schließen eines Schalters am Armaturenbrett erregbar ist, so daß der Haken 19 in der beschriebenen Weise entgegen der Kraft der Feder 23 in die Freigabestellung verschwenkt wird.

Die Erfindung ist nicht auf einen Handschuhkasten mit der dargestellten Viergelenk-Lagerung beschränkt, sondern auch für einen ausschließlich verschiebbaren Handschuhkasten, beispielsweise entsprechend dem DE-GM 7 000 572, oder einen ausschließlich verschwenkbaren Handschuhkasten, beispielsweise entsprechend der DE-A 33 11 169, verwendbar.

Die Erfindung ist auch nicht auf die dargestellte Schließeinrichtung beschränkt, die nur der Einfachheit halber als aus Haken und Schließbolzen bestehend dargestellt wurde.

## Patentansprüche

1. Beweglicher Handschuhkasten für ein Kraftfahrzeug, der schwenkbar und/oder verschiebbar in einem am Armaturenbrett angebrachten Rahmen (6) gelagert ist, wobei zwischen dem Handschuhkasten (1) und dem Rahmen (6) eine Schließeinrichtung, bestehend aus einem betätigbaren Schloßteil (19) und einem mit diesem zusammenwirkenden Fallenteil (18), vorgesehen ist,
**dadurch kennzeichnet**,
daß das Fallenteil (18) im rückwärtigen Bereich des Handschuhkastens (1) und das Schloßteil (19) dem Fallenteil gegenüberliegend am Rahmen (6) angeordnet ist, und daß zum Betätigen des Schloßteils (19) eine Fernbedienung (23, 24) mit einem Betätigungselement am Armaturenbrett vorgesehen ist.

2. Handschuhkasten nach Anspruch 1, dadurch gekennzeichnet, daß das Fallenteil (18) in der Mitte der rückwärtigen Begrenzung (4) des Handschuhkastens (1) angeordnet ist.

3. Handschuhkasten nach Anspruch 1 oder 2, dadurch gekennzeichnet, daß das Schloßteil (19) einen schwenkbaren Haken (19) und das Fallenteil einen mit diesem zusammenwirkenden Schließbolzen (18) aufweist, daß der Haken (19) entgegen Federkraft in eine den Schließbolzen (18) freigebende Stellung schwenkbar ist und an der Stelle, die mit dem Schließbolzen (18) in Kontakt kommt, wenn der Handschuhkasten (1) geschlossen wird, eine Schrägfläche (26) aufweist, durch die in Zusammenwirken mit dem Schließbolzen (18) der Haken (19) entgegen der Federkraft verschwenkt wird, bis der Schließbolzen in den Haken (19) einrastet.

4. Handschuhkasten nach einem der Ansprüche 1 bis 3, dadurch gekennzeichnet, daß die Fernbedienung ein am Schloßteil (19) angreifendes Zugseil (25) aufweist.

5. Handschuhkasten nach einem der Ansprüche 1 bis 3, dadurch gekennzeichnet, daß die Fernbedienung einen Elektromagneten aufweist, dessen Anker mit dem Schloßteil (19) verbunden ist.

## Claims

1. Movable glove compartment for a motor vehicle, which is mounted so as to be swivelled and/or displaced in a frame (6) fitted to the dashboard, there being provided between the glove compartment (1) and the frame (6) a closure mechanism consisting of an actuatable lock portion (19) and a drop-down portion (18) cooperating therewith,
characterised in that the drop-down portion (18) is arranged in the rear area of the glove compartment (1) and the lock portion (19) is arranged opposite the drop-down portion on the frame (6), and that to actuate the lock portion (19) a remote control (23, 24) having an actuating element on the dashboard is provided.

2. Glove compartment according to claim 1, characterised in that the drop-down portion (18) is arranged in the middle of the rear boundary (4) of the glove compartment (1).

3. Glove compartment according to claim 1 or 2, characterised in that the lock portion (19) incorporates a swivelling hook (19) and the drop-down portion a closure pin (18) which cooperates with said hook (19), that the hook (19) is adapted to swivel against spring force into a position in which the closure pin (18) is exposed, and at the point that comes into contact with the closure pin (18) when the glove compartment (1) is shut it has an inclined face (26) by means of which in cooperation with the closure pin (18) the hook (19) is swung against the spring force until the closure pin lodges in the hook (19).

4. Glove compartment according to any of claims 1 to 3, characterised in that the remote control incorporates a cable (25) which acts on the lock portion (19).

5. Glove compartment according to any of claims 1 to 3, characterised in that the remote control incorporates an electromagnet whose armature is joined to the lock portion (19).

## Revendications

1. Boîte à gants mobile pour véhicule automobile, montée de façon à pouvoir effectuer un mouvement pivotant et/ou de translation dans un châssis-support (6) fixé au tableau de bord, un dispositif de fermeture, se composant d'une partie clenche (19) manoeuvrable et d'une partie mentonnet (18) coopérant avec celle-ci, étant prévu entre la boîte à gants (1) et le châssis-support (6),
caractérisée en ce que la partie mentonnet (18) est disposée dans la région arrière de la boîte à gants (1) et la partie clenche (19) est disposée sur le châssis-support (6) en face de la partie mentonnet, et en ce qu'il est prévu, pour la manoeuvre de la partie clenche (19), une commande à distance (23, 24) avec un élément d'actionnement sur le tableau de bord.

2. Boîte à gants selon la revendication 1, caractérisée en ce que la partie mentonnet (18) est disposée au milieu de la paroi arrière (4) de la boîte à gants.

3. Boîte à gants selon la revendication 1 ou 2, caractérisée en se que la partie clenche (19) comporte un crochet pivotant (19) et la partie mentonnet comporte une cheville de fermeture (18) qui coopère avec ce crochet, en ce que le crochet (19) peut pivoter, contre la force antagoniste d'un ressort, dans une position où il libère la cheville de fermeture (18) et présente, à l'endroit où il entre en contact avec la cheville de fermeture (18) lors de la fermeture de la boîte à gants (1), une surface oblique (26) par laquelle, en coopération avec la cheville de fermeture (18), le crochet (19) est amené à pivoter contre la force antagoniste du ressort jusqu'à ce que la cheville de fermeture s'enclenche dans le crochet (19).

4. Boîte à gants selon l'une quelconque des revendications 1 à 3, caractérisée en ce que la commande à distance comporte un câble de traction (25) qui agit sur la partie clenche (19).

5. Boîte à gants selon l'une quelconque des revendications 1 à 3, caractérisée en ce que la commande à distance comporte un électro-aimant dont l'armature mobile est reliée à la partie clenche (19).
